(19) Europäisches Patentamt
European Patent Office
Office européen des brevets

(11) **EP 0 994 580 B1**

(12) **FASCICULE DE BREVET EUROPEEN**

(45) Date de publication et mention
de la délivrance du brevet:
**25.07.2007 Bulletin 2007/30**

(51) Int Cl.:
**H04B 7/26** (2006.01)   **H04J 3/16** (2006.01)
**H04J 7/00** (2006.01)

(21) Numéro de dépôt: **99402417.2**

(22) Date de dépôt: **04.10.1999**

(54) **Procédé de transmission dans un système de radiocommunication du type à accès multiple**

Übertragungsverfahren in einem Funkkommunikationssystem mit Vielfachzugriff

Transmission method in a multiple access radiocommunication system

(84) Etats contractants désignés:
**AT BE CH CY DE DK ES FI FR GB GR IE IT LI LU MC NL PT SE**

(30) Priorité: **15.10.1998 FR 9812928**

(43) Date de publication de la demande:
**19.04.2000 Bulletin 2000/16**

(73) Titulaire: **Alcatel Lucent**
**75008 Paris (FR)**

(72) Inventeur: **Sari, Hikmet**
**94000 Créteil (FR)**

(74) Mandataire: **El Manouni, Josiane et al**
**Alcatel Lucent**
**Intellectual Property & Standards**
**54 rue La Boétie**
**75008 Paris (FR)**

(56) Documents cités:
**EP-A- 0 630 132**         **FR-A- 2 719 959**

**Description**

La présente invention concerne d'une manière générale les systèmes de radiocommunication, de type dit à accès multiple.

Différentes techniques d'accès multiple sont connues, notamment la technique d'accès multiple à répartition de code, ou AMRC, ou encore CDMA (pour "code-division multiple access" en anglais), ou encore la technique d'accès multiple à répartition temporelle, ou AMRT, ou encore TDMA (pour "time divison multiple access" en anglais).

D'une façon générale, le CDMA est devenu très à la mode ces dernières années et est maintenant utilisé dans un certain nombre de standards pour les communications terrestres ainsi que pour les systèmes satellitaires.

Il existe deux techniques de base en CDMA. La première utilise des séquences pseudo-aléatoires pour étalement du spectre à l'émission et désétalement à la réception. Par la suite, nous appellerons cette technique PN-CDMA (de l'anglais "pseudo-noise CDMA"). La deuxième utilise des séquences orthogonales comme les séquences de Walsh-Hadamard. Cette technique sera appelée par la suite OCDMA (de l'anglais "Orthogonal CDMA").

On rappelle brièvement les principes des techniques d'accès multiple telles que les techniques TDMA, OCDMA et PN-CDMA mentionnées précédemment.

Considérons un système de radiocommunication point-multipoints dans lequel une station centrale sert N utilisateurs.

La technique TDMA consiste à multiplexer dans le temps les signaux des différents utilisateurs, pour former un multiplex temporel appelé aussi trame. La trame de la voie montante est ainsi divisée en N unités temporelles, ou intervalles de temps, ou "time-slots" en anglais, et chaque intervalle de temps est alloué à un utilisateur. Autrement dit, les signaux émanant des différents utilisateurs sont séparés dans le temps, de façon à ce qu'ils puissent être détectés par la station centrale sans aucune interférence mutuelle. Si W est la bande nécessaire pour la transmission d'un débit de D bauds dans la technique de modulation utilisée, un système TDMA avec N utilisateurs chacun transmettant un débit de D bauds nécessite une bande de fréquence de N.WHz.

D'une façon générale, le CDMA est basé sur l'étalement de spectre par séquence directe qui prend ses origines des communications militaires. Les deux attributs de l'étalement du spectre sont la discrétion (le signal est noyé dans le bruit) et la robustesse aux brouilleurs à bande étroite.

L'OCDMA est une technique qui utilise des séquences parfaitement orthogonales entre elles. Ainsi, l'interférence mutuelle entre les signaux étalés émanant des différents utilisateurs est nulle. Lorsque la bande disponible sur le canal montant vers la station centrale est N fois la bande nécéssaire à chaque utilisateur individuel, alors exactement N utilisateurs peuvent être servis en OCDMA, car le nombre de séquences orthogonales de longueur N est bien N. Ceci indique que la capacité de l'OCDMA est exactement la même que celle du TDMA.

Dans la technique PN-CDMA, les séquences d'étalement sont des séquences pseudo-aléatoires, et donc ne sont pas orthogonales. Par conséquent, il y a interférence dès qu'il y a deux utilisateurs actifs. Lorsque tous les signaux sont de même puissance, l'interférence d'un utilisateur sur un autre a une puissance de $1/N$, si la puissance du signal utile est normalisée à 1. Lorsque p utilisateurs sont actifs, chaque utilisateur reçoit une interférence de $(p-1)/N$ des autres $p-1$ utilisateurs. Si l'on suppose que N utilisateurs sont actifs, le rapport du signal utile sur l'interférence totale est alors égal à $N-1/N$ (à peu près égal à 1), ce qui indique qu'il n'est pas possible d'avoir N utilisateurs dans un système PN-CDMA ayant un facteur d'étalement de N. Le nombre d'utilisateurs que l'on peut servir est directement lié à la dégradation que l'on est prêt à accepter. Par exemple, si l'on veut limiter l'interférence à 30% de la puissance du signal utile, le nombre d'utilisateurs doit être limité à 0.3N, ce qui est plus de trois fois inférieur à la capacité des systèmes TDMA et OCDMA.

De ce qui précède, on retient que la plus petite capacité est celle du PN-CDMA. On peut même penser que cette technique n'est pas une technique d'accès multiple naturelle puisqu'il en résulte une interférence dès qu'il y a deux utilisateurs actifs, alors que les autres techniques donnent une interférence strictement nulle jusqu'à un nombre d'utilisateurs N. Par contre, le TDMA et l'OCDMA classiques ne permettent pas d'ajouter un seul utilisateur supplémentaire lorsque ce nombre maximal est atteint.

Un objet de la présente invention consiste dans une variante de ces techniques d'accès multiple, de capacité supérieure aux techniques connues.

Plus particulièrement, un objet de la présente invention consiste dans un procédé de transmission pour système de radiocommunication du type à accès multiple, à ressources de transmission orthogonales, qui soit capable de supporter un nombre M d'utilisateurs supérieur au nombre N de ressources de transmission de ce système, et dans lequel aucune dégradation du rapport signal à bruit n'est obtenue pour un nombre d'utilisateurs inférieur ou égal à N, et la dégradation du rapport signal à bruit est minimale lorsque le nombre d'utilisateurs devient supérieur à N.

La présente invention a ainsi pour objet un procédé de transmission dans un système de radiocommunication du type à accès multiple, à ressources de transmission orthogonales, ce procédé étant essentiellement caractérisé en ce que, pour un nombre M d'utilisateurs supérieur au nombre N de ressources de transmission de ce système :

- au moins une desdites ressources de transmission est partagée à un instant donné par au moins deux utilisateurs,
- les utilisateurs qui partagent une ressource de transmission changent au cours du temps, de manière à répartir le mieux possible entre les différents utilisateurs la dégradation de rapport signal à bruit résultant dudit partage,
- ladite dégradation de rapport signal à bruit est en outre réduite en différenciant, par leur niveau d'émission, les signaux correspondant à des utilisateurs partageant une même ressource à un instant donné.

La présente invention a également pour objet un dispositif d'émission et un dispositif de réception pour la mise en oeuvre d'un tel procédé.

FR-A-2 719 959 (ALCATEL) décrit un système où un intervalle de temps est partagé entre deux utilisateurs.

D'autres objets et caractéristiques de la présente invention apparaîtront à la lecture de la description suivante d'exemples de réalisation, faite en relation avec les dessins ci-annexés, dans lesquels:

- la figure 1 est destinée à illustrer un premier exemple d'allocation de ressources de transmission suivant l'invention,
- la figure 2 est destinée à illustrer un deuxième exemple d'allocation de ressources de transmission suivant l'invention,
- la figure 3 est destinée à illustrer un troisième exemple d'allocation de ressources de transmission suivant l'invention,
- la figure 4 est destinée à illustrer le principe de la différenciation, par leur niveau d'émission, des signaux correspondant à des utilisateurs partageant une même ressource à un instant donné,
- la figure 5 est destinée à illustrer le type de moyens à prévoir dans un dispositif d'émission suivant l'invention,
- la figure 6 est destinée à illustrer le type de moyens à prévoir dans un dispositif de réception suivant l'invention.

La présente invention permet d'augmenter la capacité de techniques d'accès multiple utilisant des ressources de transmission orthogonales, telles que notamment l'OCDMA (lesdites ressources de transmission étant alors des séquences d'étalement) ou le TDMA (lesdites ressources de transmission étant alors des intervalles de temps, ou "time-slots"). La description sera faite pour l'OCDMA, mais elle est également applicable notamment au TDMA en suivant le même raisonnement et la même démarche.

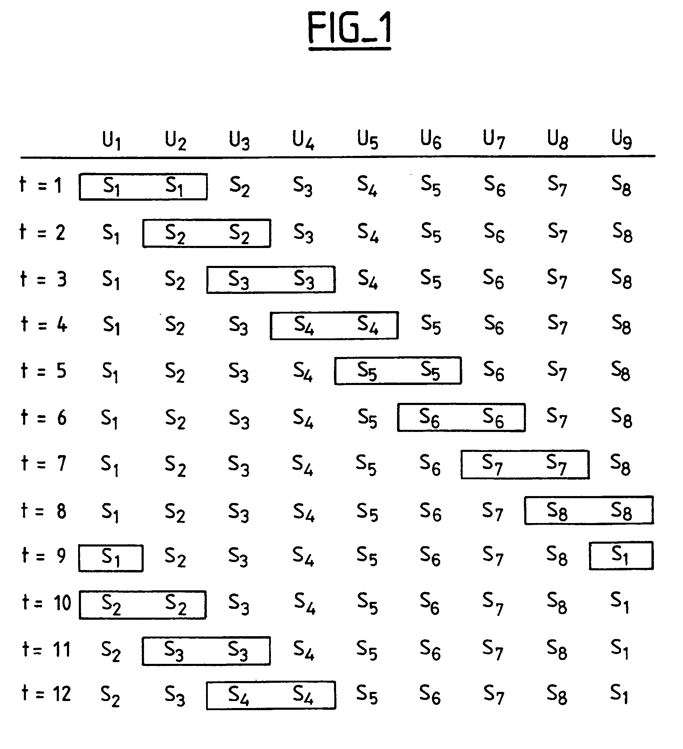

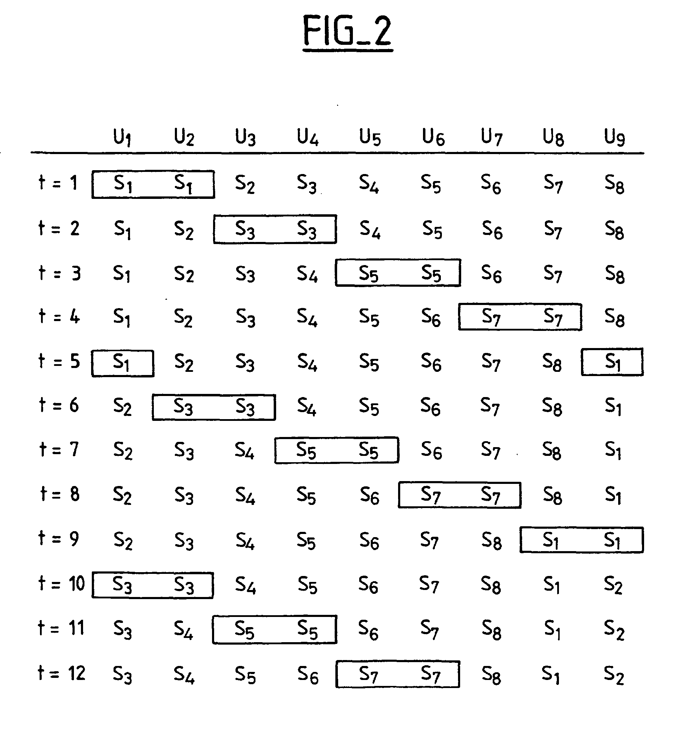

On considère à titre d'exemple un système avec un facteur d'étalement de N dans lequel on veut placer N+1 utilisateurs. Autrement dit, on veut placer un utilisateur supplémentaire par rapport à la capacité maximale qui est de N. Des exemples d'allocation sont décrits dans les figures 1 et 2, à titre d'exemple pour N=8 et M=9.

La figure 1 montre un exemple d'utilisation de huit séquences orthogonales, notées $s_1$, $s_2$,..., $s_8$, par neuf utilisateurs notés $u_1$, $u_2$,..., $u_9$. A l'instant t=1, la séquence $s_1$ est allouée aux utilisateurs $u_1$ et $u_2$, alors que chacune des sept séquences restantes est allouée à l'un des autres utilisateurs. Ainsi, à l'instant t=1, il y a collision entre les utilisateurs $u_1$ et $u_2$, puisqu'ils interfèrent l'un avec l'autre. A l'instant t=2, ce sont les utilisateurs $u_2$ et $u_3$ qui entrent en collision, la séquence $s_2$ étant allouée aux utilisateurs $u_2$ et $u_3$, alors que chacune des sept séquences restantes est allouée à l'un des autres utilisateurs. A l'instant t=3, ce sont les utilisateurs $u_3$ et $u_4$ qui entrent en collision, la séquence $s_3$ étant allouée aux utilisateurs $u_3$ et $u_4$, alors que chacun des sept autres utilisateurs utilise l'une des sept séquences orthogonales restantes. Et ainsi de suite,...

Ainsi, à tout moment il y a collision entre deux séquences, pendant que chacune des sept séquences restantes est allouée à l'un des autres utilisateurs. On remarque aussi qu'un utilisateur donné entre en collision à deux instants consécutifs, une fois avec chacun de ses voisins. Par exemple, $u_2$ est en collision avec $u_1$ à l'instant t=2 et avec $U_3$ à l'instant t=3. La notion de voisin est circulaire, et les voisins de $u_9$ sont donc $u_8$ et $u_1$. Après les deux collisions consécutives, un utilisateur donné reste sans collision pendant sept instants unitaires (un instant unitaire pouvant notamment être constitué par une période-symbole, ou durée d'un symbole à transmettre).

La figure 2 montre un autre exemple dans lequel les collisions pour un utilisateur donné ne sont pas consécutives. Plus précisément, après une collision, un utilisateur reste sans collision pendant trois instants unitaires, entre de nouveau en collision, et puis reste sans collision pendant quatre instants unitaires, et ce processus périodique recommence de nouveau. Par exemple $u_1$ est en collision avec $u_2$ à l'instant t=1, puis en collision avec $u_9$ à l'instant t=5, puis à nouveau en collision avec $u_2$ à l'instant t=10, et ainsi de suite, ...

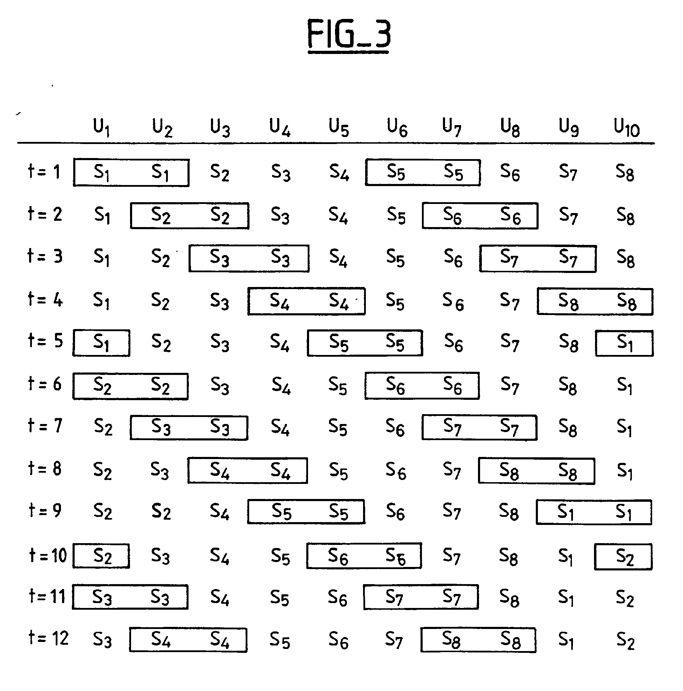

La figure 3 montre un exemple d'utilisation de huit séquences orthogonales, également notées $s_1$, $s_2$,..., $s_8$, par dix utilisateurs notés $u_1$, $u_2$,..., $u_9$, $u_{10}$, cet exemple correspondant donc à N=8 et M=10. Ici, à l'instant t=1, il y a collision à la fois entre $u_1$ et $u_2$ (qui utilisent en l'occurrence la même séquence $s_1$) et entre $u_6$ et $u_7$ (qui utilisent en l'occurrence la même séquence $s_5$). A l'instant suivant, les collisions sont entre $u_2$ et $u_3$ d'une part (qui utilisent en l'occurrence la même séquence $s_2$) et entre $u_7$ et $u_8$ d'autre part (qui utilisent en l'occurrence la même séquence $s_6$ ), et ainsi de suite...

On comprend que d'autres exemples que ceux illustrés sur les figures 1 à 3 peuvent être envisageables, et qu'il n'est pas possible de les décrire tous ici de manière exhaustive.

Par exemple, sur les figures 1 à 3, la ou les séquences partagées à un instant donné pourraient être les mêmes aux différents instants, dès lors qu'à chaque instant les séquences non partagées sont distinctes de la ou des séquences partagées, et distinctes les unes des autres.

De même, sur les figures 1 à 3, l'allocation des séquences non partagées pourrait être autre que celle illustrée à titre d'exemple sur ces figures, dès lors qu'à chaque instant ces séquences non partagées sont distinctes les unes des autres et distinctes de la ou des séquences partagées.

Par ailleurs, notamment sur la figure 3, une seule séquence pourrait être partagée, à un instant donné, par plus de deux utilisateurs, au lieu de deux séquences partagées chacune par deux utilisateurs, comme illustré .

En outre, les valeurs N=8, et M=9 ou M=10 n'ont bien sûr été données qu'à titre d'exemple.

Ainsi, de manière générale, suivant l'invention, au moins une ressource est partgée à un instant donné par au moins deux utilisateurs, et les utilisateurs qui partagent une ressource changent au cours du temps, de manière à répartir le mieux possible entre les différents utilisateurs la dégradation de rapport signal à bruit résultant dudit partage.

Il est en outre nécessaire de contrer les interférences résultant de ce partage de séquences. Une solution possible serait d'utiliser un codage correcteur d'erreur capable de corriger les erreurs résultant de ces collisions périodiques. Toutefois, les codes correcteurs d'erreurs classiques nécessitent au minimum deux symboles de redondance par bloc pour corriger une erreur de symbole. Autrement dit, dans cette approche chaque utilisateur perd $2/(N+1)$ième de sa capacité pour qu'un utilisateur supplémentaire puisse être ajouté.

La présente invention, tel qu'il va maintenant être décrit, permet en outre d'augmenter le nombre d'utilisateurs, sans réduire leur débit, tout en contrant les interférences résultant d'un tel partage de ressources.

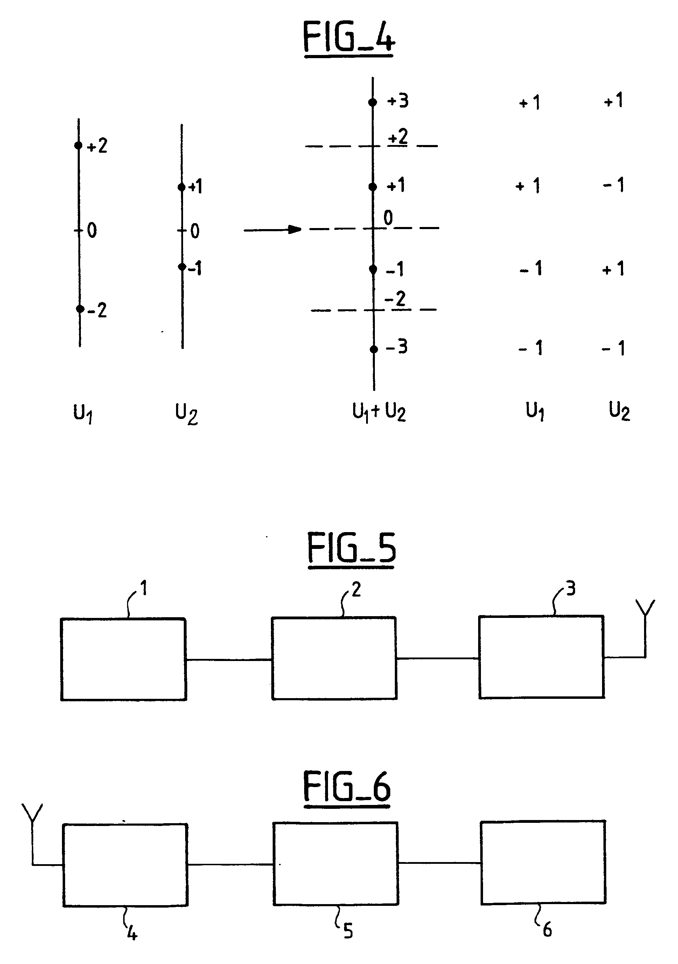

On se réfère de nouveau par exemple à la figure 1. A l'instant t=1, ce sont les utilisateurs $u_1$ et $u_2$ qui sont en collision. Plutôt que d'émettre des symboles prenant leurs valeurs du même alphabet avec le même niveau d'émission, on double le niveau d'émission du symbole émis par l'un de ces utilisateurs, $u_1$ par exemple. Par exemple, comme illustré sur la figure 4, dans le cas d'un alphabet binaire, le symbole émis par l'utilisateur $u_1$ prend ses valeurs de l'alphabet (-2, +2) alors que l'utilisateur $u_2$, comme les autres utilisateurs, émet des symboles prenant leurs valeurs de l'alphabet (-1,+1).

En l'absence de bruit, le signal r(s1) reçu et désétalé par la séquence $s_1$ est la somme des symboles émis par $u_1$ et $u_2$. Celui-ci prend alors ses valeurs de l'alphabet (-3, -1, +1, +3), comme illustré également sur la figure 4.

Comme illustré également sur la figure 4, lorsque le signal reçu vaut -3 ou -1, le symbole émis par $u_1$ est un -1, et le symbole émis par $u_1$ est un +1 dans le cas contraire. Quant au symbole émis par $u_2$, celui-ci est un -1 lorsque le signal reçu vaut -3 ou +1, et un +1 lorsque le signal reçu vaut -1 ou +3.

Plus généralement, en présence de bruit, et comme illustré également sur la figure 4, le processus de détection en réception peut être représenté comme suit :

$$\hat{a}_1(u_1) = -1 \quad \text{et} \quad \hat{a}_1(u_2) = -1 \quad \text{si} \quad r_1(s_1) < -2$$

$$\hat{a}_1(u_1) = -1 \quad \text{et} \quad \hat{a}_1(u_2) = +1 \quad \text{si} \quad -2 < r_1(s_1) < 0$$

$$\hat{a}_1(u_1) = +1 \quad \text{et} \quad \hat{a}_1(u_2) = -1 \quad \text{si} \quad 0 < r_1(s_1) < +2$$

$$\hat{a}_1(u_1) = +1 \quad \text{et} \quad \hat{a}_1(u_2) = +1 \quad \text{si} \quad 2 < r_1(s_1)$$

Dans ces équations, $\hat{a}_i(u_i)$ représente le résultat du décodage effectué en réception sur le symbole émis par l'utilisateur $u_i$ à l'instant t=i, et $r_i(s_i)$ signifie le signal reçu à l'instant t=i après désétalement par la séquence $s_1$.

Ce décodage se fait en l'occurrence en comparant le signal $r_i(s_i)$ par rapport à différents seuils de décision, correspondant aux différentes combinaisons possibles pour les différentes valeurs des différents alphabets utilisés par les différents utilisateurs partageant une même séquence à l'instant considéré. Ainsi, dans l'exemple considéré, lesdits seuils de décision ont pour niveaux -2, 0, +2.

On peut ainsi détecter les symboles simultanément émis par $u_1$ et $u_2$ en utilisant la même séquence d'étalement $s_1$. Au contraire, dans le cas où les symboles émis par $u_1$ et $u_2$ prendraient leurs valeurs du même alphabet, par exemple (-1, +1), le signal r(s_1) reçu et désétalé par la séquence $s_1$ prendrait ses valeurs de l'alphabet (-2, 0, +2). Une ambiguïté existerait alors pour la valeur 0, qui pourrait correspondre soit à l'émission par $u_1$ du symbole +1 et par $u_2$ du symbole -1, soit à l'émission par $u_1$ du symbole -1 et par $u_2$ du symbole +1, d'où une impossibilité de restituer les trains de symboles émis par les utilisateurs $u_1$ et $u_2$.

A l'instant suivant (t=2), c'est l'alphabet de l'un des utilisateurs $u_2$ et $u_3$, $u_2$ par exemple, qui est (-2, +2) alors que tous les autres utilisateurs, et notamment $u_3$, émettent des symboles d'un alphabet (-1, +1). Par le même raisonnement que précédemment, on peut détecter les symboles émis par $u_2$ et $u_3$ sans dégrader le taux d'erreur.

Le processus continue ainsi en donnant un alphabet (-2, +2) à l'utilisateur $u_3$ à l'instant t=3, à l'utilisateur $u_4$ à l'instant t=4, et ainsi de suite. Ainsi, dans l'exemple illustré sur la figure 1, une fois sur neuf, et chaque utilisateur à son tour, émet ainsi des symboles d'un alphabet (-2, +2). Dans un système à N séquences orthogonales, l'alphabet (-2, +2) arrive ainsi une fois tous les N+1 symboles et donc le coût en puissance moyenne de l'augmentation de la capacité d'un utilisateur est de

$$\Delta = 10 . \log \left( \frac{N+4}{N+1} \right)$$

C'est la dégradation du rapport signal à bruit (S/B) exprimée en dB. Par exemple, pour N=64, la dégradation est de 0.2dB. Avec N=128, la dégradation n'est que de 0.1dB par utilisateur et on peut donc ainsi ajouter 10 utilisateurs en acceptant une dégradation de 1dB des performances.

On comprend que la figure 4 n'a été donnée qu'à titre d'exemple destiné à illustrer une telle technique.

Par exemple, les alphabets pourraient être différents des alphabets (-2, +2) et (-1, +1) considérés, dès lors qu'ils permettent la différenciation recherchée.

Par ailleurs, dans le cas où plus de deux utilisateurs partageraient une même séquence, plus de deux alphabets seraient alors à utiliser pour permettre la différenciation recherchée.

Ainsi, de manière générale, suivant cette technique, la dégradation de rapport signal à bruit est réduite en différenciant, par leur niveau d'émission, les signaux correspondant à des utilisateurs partageant une même ressource à un instant donné.

Comme le PN-CDMA, la technique ainsi décrite permet d'augmenter le nombre d'utilisateurs en acceptant une dégradation des performances, mais contrairement au PN-CDMA, la dégradation est nulle jusqu'à ce que le nombre d'utilisateurs atteigne N, et est minimale ensuite, alors que les performances du PN-CDMA deviennent inacceptables bien avant que le nombre d'utilisateurs n'ait atteint ce nombre.

La présente invention a également pour objet un dispositif d'émission et un dispositif de réception pour la mise en oeuvre d'un tel procédé.

De manière connue, un dispositif d'émission peut être décomposé fonctionnellement, comme illustré sur la figure 5, en :

- des moyens 1 de codage d'informations à transmettre,
- des moyens 2 dits ici d'accès multiple, permettant une mise au format de transmission correspondant à la technique d'accès multiple considérée,
- des moyens 3 de modulation et d'émission radioélectrique .

Inversement, un dispositif de réception peut être décomposé, comme illustré sur la figure 6, en :

- des moyens 4 de réception radioélectrique et de démodulation, effectuant des opérations inverses de celles effectuées par les moyens 3,
- des moyens 5 dits ici également d'accès multiple, effectuant des opérations inverses de celles effectuées par les moyens 2,
- des moyens 6 de décodage, effectuant des opérations inverses de celles effectuées par les moyens 1.

Suivant l'invention, les moyens d'accès multiple 2 et 5 comportent des moyens pour utiliser une ressource de transmission telle que, pour un nombre M d'utilisateurs supérieur au nombre N de ressources de ce système :

- au moins une desdites ressources est partagée à un instant donné par au moins deux utilisateurs,
- les utilisateurs qui partagent une ressource changent au cours du temps, de manière à répartir le mieux possible entre les différents utilisateurs la dégradation de rapport signal à bruit résultant dudit partage.

De tels moyens opèrent suivant le procédé décrit précédemment, dont des exemples ont été illustrés sur les figures 1 à 3. Leur réalisation pratique ne soulevant pas de difficulté particulière, ces moyens ne nécessitent pas d'être décrits ici de manière plus détaillée que par leur fonction.

En outre, la sélection de ressource de transmission à utiliser dans les différents dispositifs d'émission et de réception du système considéré nécessite une coordination à l'intérieur de ce système et une information correspondante de ces dispositifs d'émission et de réception. Cependant, de telles opération de coordination et d'information étant courantes dans de tels sytèmes, elles n'appellent pas ici de description spécifique.

Egalement suivant l'invention, les moyens 1 de codage d'informations à transmettre comportent des moyens pour différencier, par leur niveau d'émission, les signaux correspondant à différents utilisateurs partageant une même ressource à un instant donné.

Et de même les moyens 6 de décodage d'informations reçues comportent eux-mêmes des moyens pour comparer le niveau de signal reçu par rapport à différents seuils de décision correspondant aux différentes combinaisons possibles de niveaux d'émission différents pour des utilisateurs partageant à un instant donné une même ressource.

De tels moyens opèrent également suivant le procédé décrit précédemment, dont un exemple à été illustré sur la figure 4. Leur réalisation pratique ne soulevant pas non plus de difficulté particulière, ces moyens ne nécessitent pas non plus d'être décrits ici de manière plus détaillée que par leur fonction.

La sélection des niveaux d'émission et donc des seuils de décision à utiliser dans les différents dispositifs d'émission et de réception du système considéré nécessite de même une coordination à l'intérieur de ce système et une information correspondante de ces dispositifs d'émission et de réception. De même, de telles opérations de coordination et d'information sont courantes dans de tels sytèmes, et donc ne nécessitent pas de description spécifique.

**Revendications**

1. Procédé de transmission dans un système de radiocommunication du type à accès multiple, à ressources de transmission orthogonales, ce procédé étant **caractérisé en ce que**, pour un nombre M d'utilisateurs supérieur au nombre N de ressources de transmission de ce système :

   - au moins une desdites ressources de transmission ($s_1$, ..., $s_8$) est partagée à un instant donné par au moins deux utilisateurs,
   - les utilisateurs qui partagent une ressource de transmission changent au cours du temps, de manière à répartir le mieux possible entre les différents utilisateurs ($u_1$, ..., $u_9$) la dégradation de rapport signal à bruit résultant dudit partage,
   - ladite dégradation de rapport signal à bruit est en outre réduite en différenciant, par leur niveau d'émission, les signaux correspondant à des utilisateurs partageant une même ressource à un instant donné.

2. Dispositif d'émission pour système de radiocommunication du type à accès multiple, à ressources de transmission orthogonales, **caractérisé en ce qu'**il comporte :

   - des moyens (2) pour utiliser une ressource de transmission telle que, pour un nombre M d'utilisateurs supérieur au nombre N de ressources de ce système :

     -- au moins une desdites ressources ($s_1$; ..., $s_8$) est partagée à un instant donné par au moins deux utilisateurs,
     -- les utilisateurs qui partagent une ressource changent au cours du temps, de manière à répartir le mieux possible entre les différents utilisateurs ($u_1$, ...$u_9$) la dégradation de rapport signal à bruit résultant dudit partage,

   - des moyens (1) pour différencier, par leur niveau d'émission, les signaux émis par différents utilisateurs partageant une même ressource à un instant donné.

3. Dispositif de réception pour système de radiocommunication du type à accès multiple, à ressources de transmission orthogonales, **caractérisé en ce qu'**il comporte :

   - des moyens (5) pour utiliser une ressource de transmission telle que, pour un nombre M d'utilisateurs supérieur du nombre N de ressources de transmission de ce système :

     -- au moins une desdites ressources ($s_1$, ..., $s_8$) est partagée à un instant donné par au moins deux utilisateurs,
     -- les utilisateurs qui partagent une ressource changent au cours du temps, de manière à répartir le mieux possible entre les différents utilisateurs ($u_1$, ..., $u_9$) la dégradation de rapport signal à bruit résultant dudit partage,

- des moyens (6) pour comparer un niveau de signal reçu par rapport à différents seuils de décision correspondant aux différentes combinaisons possibles de niveaux d'émission différents pour des utilisateurs partageant à un instant donné une même ressource.

**Claims**

1. Method of transmission in a multiple access type radio communication system with orthogonal transmission resources, this method being **characterized in that**, for a number M of users greater than the number N of transmission resources of this system:

- at least one of said transmission resources ($s_1$, ..., $s_8$) is shared at a given time by at least two users,
- the users who share a transmission resource change over time, in such a way as to achieve the best possible distribution between the various users ($u_1$, ..., $u_9$) of the deterioration of the signal to noise ratio resulting from such sharing,
- said deterioration of the signal to noise ratio is further reduced by distinguishing between the signals corresponding to users sharing the same resource at a given time according to their sending level.

2. Sender device for a multiple access type radio communication system with orthogonal transmission resources, **characterized in that** it includes:

- means (2) for using a transmission resource such that, for a number M of users greater than the number N of resources of that system:

-- at least one of said resources ($s_1$, ..., $s_8$) is shared at a given time by at least two users,
-- the users who share a resource change over time, in such a way as to achieve the best possible distribution between the various users ($u_1$, .... $u_9$) of the deterioration of the signal to noise ratio resulting from such sharing,

- means (1) for distinguishing between the signals sent by various users sharing the same resource at a given time according to their sending level.

3. Receiver device for a multiple access type radio communication system with orthogonal transmission resources, **characterized in** thai it includes:

- means (5) for using a transmission resource such that, for a number M of users greater than the number N of transmission resources of that system:

-- at least one of said resources ($s_1$, ..., $s_8$) is shared at a given time by at least two users,
-- the users who share a transmission resource change over time, in such a way as to achieve the best possible distribution between the various users ($u_1$, ..., $u_9$) of the deterioration of the signal to noise ratio resulting from such sharing,

- means (6) for comparing a received signal level to various decision thresholds corresponding to various possible combinations of different sending levels for users sharing the same resource at a given time.

**Patentansprüche**

1. Übertragungsverfahren in einem Funkkommunikationssystem mit mit orthogonalen Übertragungsmitteln, wobei dieses Verfahren **dadurch gekennzeichnet ist, dass** bei einer Anzahl M von Nutzern größer als die Anzahl N von Übertragungsmitteln dieses Systems:

mindestens eines dieser Übertragungsmittel ($s_1$, ...,$s_8$) zu einem bestimmten Zeitpunkt von mindestens zwei Nutzern gemeinsam benutzt wird,
- die Nutzer, die ein Übertragungsmittel gemeinsam nutzen, im Laufe der Zeit wechseln, so dass die Abschwächung des Signal-Rausch-Verhältnisses, die sich aus dieser gemeinsamen Nutzung ergibt, unter den verschiedenen Nutzern ($u_1$, ..., $u_9$) bestmöglich verteilt wird,

- diese Abschwächung des Signal-Rausch-Verhältnisses außerdem reduziert wird, indem die Signal, die Nutzern entsprechen, welche ein und dasselbe Mittel zu einem bestimmten Zeitpunkt nutzen, durch ihren Sendepegel differenziert werden.

2. Sendevorrichtung für Funkkommunikationssystem mit Vielfachzugriff mit orthogonalen Übertragungsmitteln, **dadurch gekennzeichnet, dass** sie folgendes einschließt:

- Mittel (2) zur Nutzung eines Übertragungsmittels, so dass bei einer Anzahl M von Nutzern größere als die Anzahl N von Übertragungsmitteln dieses Systems:

-- mindestens eines dieser Übertragungsmittel ($s_1$,..., $s_8$) zu einem bestimmten Zeitpunkt von mindestens zwei Nutzern gemeinsam benutzt wird.
-- die Nutzer, die ein Übertragungsmittel gemeinsam nutzen, im Laufe der Zeit wechseln, so dass die Abschwächung des Signal-Ransch-Verhältnisses, die sich aus dieser gemeinsamen Nutzung ergibt unter den verschiedenen Nutzern ($u_1$, ..., $u_9$) bestmöglich verteilt wird,

- Mittel (1) zur Differenzierung der Signale, die von verschiedenen Nutzern gesendet werden, die zu einem bestimmten Zeitpunkt ein und dasselbe Mittel gemeinsam benutzen, durch ihren Sendepegel.

3. Empfangsvorrichtung für Funkkommunikationssystem mit Vielfachzugriff mit orthogonalen Übertragungsmitteln, **dadurch gekennzeichnet, dass** sie folgendes einschließt:

- Mittel (5) zur Nutzung eines Übertragungsmittels, so dass bei einer Anzahl M von Nutzern größer als die Anzahl N von Übertragungsmitteln dieses Systems:

-- mindestens eines dieser Übertragungsmittel ($s_1$, ..., $s_8$) zu einem bestimmten Zeitpunkt von mindestens zwei Nutzern gemeinsam benutzt wird,
-- die Nutzer, die ein Übertragungsmittel gemeinsam nutzen, im Laufe der Zeit wechseln, so dass die Abschwächung des Signal-Rausch-Verhältnisses, die sich aus dieser gemeinsamen Nutzung ergibt, unter den verschiedenen Nutzern ($u_1$, ..., $u_9$) bestmöglich verteilt wird,

- Mittel (6) zum Vergleichen eines empfangenen Signalpegels bezogen auf verschiedene Entscheidungsschwellen, die den verschiedenen möglichen Kombinationen von verschiedenen Sendepegeln für Nutzer entsprechen, die zu einem bestimmten Zeitpunkt ein und dasselbe Mittel gemeinsam benutzen.

# FIG_1

| | $U_1$ | $U_2$ | $U_3$ | $U_4$ | $U_5$ | $U_6$ | $U_7$ | $U_8$ | $U_9$ |
|---|---|---|---|---|---|---|---|---|---|
| $t = 1$ | $\boxed{S_1}$ | $\boxed{S_1}$ | $S_2$ | $S_3$ | $S_4$ | $S_5$ | $S_6$ | $S_7$ | $S_8$ |
| $t = 2$ | $S_1$ | $\boxed{S_2}$ | $\boxed{S_2}$ | $S_3$ | $S_4$ | $S_5$ | $S_6$ | $S_7$ | $S_8$ |
| $t = 3$ | $S_1$ | $S_2$ | $\boxed{S_3}$ | $\boxed{S_3}$ | $S_4$ | $S_5$ | $S_6$ | $S_7$ | $S_8$ |
| $t = 4$ | $S_1$ | $S_2$ | $S_3$ | $\boxed{S_4}$ | $\boxed{S_4}$ | $S_5$ | $S_6$ | $S_7$ | $S_8$ |
| $t = 5$ | $S_1$ | $S_2$ | $S_3$ | $S_4$ | $\boxed{S_5}$ | $\boxed{S_5}$ | $S_6$ | $S_7$ | $S_8$ |
| $t = 6$ | $S_1$ | $S_2$ | $S_3$ | $S_4$ | $S_5$ | $\boxed{S_6}$ | $\boxed{S_6}$ | $S_7$ | $S_8$ |
| $t = 7$ | $S_1$ | $S_2$ | $S_3$ | $S_4$ | $S_5$ | $S_6$ | $\boxed{S_7}$ | $\boxed{S_7}$ | $S_8$ |
| $t = 8$ | $S_1$ | $S_2$ | $S_3$ | $S_4$ | $S_5$ | $S_6$ | $S_7$ | $\boxed{S_8}$ | $\boxed{S_8}$ |
| $t = 9$ | $\boxed{S_1}$ | $S_2$ | $S_3$ | $S_4$ | $S_5$ | $S_6$ | $S_7$ | $S_8$ | $\boxed{S_1}$ |
| $t = 10$ | $\boxed{S_2}$ | $\boxed{S_2}$ | $S_3$ | $S_4$ | $S_5$ | $S_6$ | $S_7$ | $S_8$ | $S_1$ |
| $t = 11$ | $S_2$ | $\boxed{S_3}$ | $\boxed{S_3}$ | $S_4$ | $S_5$ | $S_6$ | $S_7$ | $S_8$ | $S_1$ |
| $t = 12$ | $S_2$ | $S_3$ | $\boxed{S_4}$ | $\boxed{S_4}$ | $S_5$ | $S_6$ | $S_7$ | $S_8$ | $S_1$ |

# FIG_2

| | $U_1$ | $U_2$ | $U_3$ | $U_4$ | $U_5$ | $U_6$ | $U_7$ | $U_8$ | $U_9$ |
|---|---|---|---|---|---|---|---|---|---|
| t = 1 | $S_1$ | $S_1$ | $S_2$ | $S_3$ | $S_4$ | $S_5$ | $S_6$ | $S_7$ | $S_8$ |
| t = 2 | $S_1$ | $S_2$ | $S_3$ | $S_3$ | $S_4$ | $S_5$ | $S_6$ | $S_7$ | $S_8$ |
| t = 3 | $S_1$ | $S_2$ | $S_3$ | $S_4$ | $S_5$ | $S_5$ | $S_6$ | $S_7$ | $S_8$ |
| t = 4 | $S_1$ | $S_2$ | $S_3$ | $S_4$ | $S_5$ | $S_6$ | $S_7$ | $S_7$ | $S_8$ |
| t = 5 | $S_1$ | $S_2$ | $S_3$ | $S_4$ | $S_5$ | $S_6$ | $S_7$ | $S_8$ | $S_1$ |
| t = 6 | $S_2$ | $S_3$ | $S_3$ | $S_4$ | $S_5$ | $S_6$ | $S_7$ | $S_8$ | $S_1$ |
| t = 7 | $S_2$ | $S_3$ | $S_4$ | $S_5$ | $S_5$ | $S_6$ | $S_7$ | $S_8$ | $S_1$ |
| t = 8 | $S_2$ | $S_3$ | $S_4$ | $S_5$ | $S_6$ | $S_7$ | $S_7$ | $S_8$ | $S_1$ |
| t = 9 | $S_2$ | $S_3$ | $S_4$ | $S_5$ | $S_6$ | $S_7$ | $S_8$ | $S_1$ | $S_1$ |
| t = 10 | $S_3$ | $S_3$ | $S_4$ | $S_5$ | $S_6$ | $S_7$ | $S_8$ | $S_1$ | $S_2$ |
| t = 11 | $S_3$ | $S_4$ | $S_5$ | $S_5$ | $S_6$ | $S_7$ | $S_8$ | $S_1$ | $S_2$ |
| t = 12 | $S_3$ | $S_4$ | $S_5$ | $S_6$ | $S_7$ | $S_7$ | $S_8$ | $S_1$ | $S_2$ |

## FIG_3

| | $U_1$ | $U_2$ | $U_3$ | $U_4$ | $U_5$ | $U_6$ | $U_7$ | $U_8$ | $U_9$ | $U_{10}$ |
|---|---|---|---|---|---|---|---|---|---|---|
| $t = 1$ | $S_1$ | $S_1$ | $S_2$ | $S_3$ | $S_4$ | $S_5$ | $S_5$ | $S_6$ | $S_7$ | $S_8$ |
| $t = 2$ | $S_1$ | $S_2$ | $S_2$ | $S_3$ | $S_4$ | $S_5$ | $S_6$ | $S_6$ | $S_7$ | $S_8$ |
| $t = 3$ | $S_1$ | $S_2$ | $S_3$ | $S_3$ | $S_4$ | $S_5$ | $S_6$ | $S_7$ | $S_7$ | $S_8$ |
| $t = 4$ | $S_1$ | $S_2$ | $S_3$ | $S_4$ | $S_4$ | $S_5$ | $S_6$ | $S_7$ | $S_8$ | $S_8$ |
| $t = 5$ | $S_1$ | $S_2$ | $S_3$ | $S_4$ | $S_5$ | $S_5$ | $S_6$ | $S_7$ | $S_8$ | $S_1$ |
| $t = 6$ | $S_2$ | $S_2$ | $S_3$ | $S_4$ | $S_5$ | $S_6$ | $S_6$ | $S_7$ | $S_8$ | $S_1$ |
| $t = 7$ | $S_2$ | $S_3$ | $S_3$ | $S_4$ | $S_5$ | $S_6$ | $S_7$ | $S_7$ | $S_8$ | $S_1$ |
| $t = 8$ | $S_2$ | $S_3$ | $S_4$ | $S_4$ | $S_5$ | $S_6$ | $S_7$ | $S_8$ | $S_8$ | $S_1$ |
| $t = 9$ | $S_2$ | $S_2$ | $S_4$ | $S_5$ | $S_5$ | $S_6$ | $S_7$ | $S_8$ | $S_1$ | $S_1$ |
| $t = 10$ | $S_2$ | $S_3$ | $S_4$ | $S_5$ | $S_6$ | $S_6$ | $S_7$ | $S_8$ | $S_1$ | $S_2$ |
| $t = 11$ | $S_3$ | $S_3$ | $S_4$ | $S_5$ | $S_6$ | $S_7$ | $S_7$ | $S_8$ | $S_1$ | $S_2$ |
| $t = 12$ | $S_3$ | $S_4$ | $S_4$ | $S_5$ | $S_6$ | $S_7$ | $S_8$ | $S_8$ | $S_1$ | $S_2$ |

## FIG_4

| $U_1$ | $U_2$ | | $U_1 + U_2$ | $U_1$ | $U_2$ |
|---|---|---|---|---|---|
| +2 | +1 | +3 | | +1 | +1 |
| 0 | 0 | +2 | | +1 | -1 |
| -2 | -1 | +1 | | -1 | +1 |
| | | 0 | | -1 | -1 |
| | | -1 | | | |
| | | -2 | | | |
| | | -3 | | | |

## FIG_5

## FIG_6

**EP 0 994 580 B1**

## RÉFÉRENCES CITÉES DANS LA DESCRIPTION

**Documents brevets cités dans la description**

- FR 2719959 A